# EUROPÄISCHE PATENTSCHRIFT

(11) **EP 0 803 311 B1**
(45) Veröffentlichungstag und Bekanntmachung des Hinweises auf die Patenterteilung: **26.06.2002**
(21) Anmeldenummer: 97104334.4
(22) Anmeldetag: 14.03.1997
(51) Int. Cl.: B23K 11/06

(54) **Verfahren und Vorrichtung zum Schweissen von Behälterzargen**
Method and device for welding can bodies
Procédé et dispositif pour souder des viroles

(30) Priorität: 25.04.1996 CH 104696
(43) Veröffentlichungstag der Anmeldung: 29.10.1997
(73) Patentinhaber: ELPATRONIC AG, 8962 Bergdietikon (CH)
(72) Erfinder: Oberholzer, Marcel, 8963 Kindhausen (CH); Schuppisser, Hermann, 5506 Mägenwil (CH); Gehrig, Urs, 8112 Otelfingen (CH); Weber, Markus, 8957 Spreitenbach (CH)

(56) Entgegenhaltungen:
- EP-A- 0 165 910
- EP-A- 0 189 805
- CH-A- 671 904

## Beschreibung

Die Erfindung betrifft ein Verfahren zum Schweissen von hohlzylindrischen Körpern gemäss Oberbegriff des Anspruchs 1. Ferner betrifft die Erfindung eine Vorrichtung gemäss Oberbegriff des Anspruchs 4.

Es ist bekannt, aus ebenen Blechen hohlzylindrische Körper zu formen, z.B. Behälterzargen und insbesondere Dosenzargen, wobei die Ränder stumpf aneinanderliegen oder ein überlappender Blechbereich gebildet wird, der dann durch Rollnahtschweissen verbunden wird. Beim Rollnahtschweissen werden bekannterweise die zu schweissenden Körper vor dem Schweissbereich durch eine Vielzahl von dem zu schweissenden Körper angepassten Rollen geführt, welche eine den Körper umgebende Passage bzw. ein Führungswerkzeug bilden, z.B. gemäss CH-A-671 904. Durch diese Rollenführungswerkzeuge wird der Körper in seiner Form gehalten und mit seinen Längskanten in eine Z-Schiene gedrückt, welche die für die Schweissung notwendige Stumpflage oder Ueberlappung der Längskanten bewirkt. Die Rollnahtschweissung erfolgt dann durch Vorschub des Bleches durch die Führungswerkzeuge und mit auf die Ueberlappung einwirkenden Schweissrollen und in der Regel unter Verwendung von Drahtelektroden. Bei der Schweissung von Behälterzargen wird eine Abfolge solcher Zargen nacheinander durch das Führungswerkzeug hindurch zu den Schweissrollen geführt. Beim Betriebsbeginn der Schweissmaschine und bei jedem Anlauf nach einem Maschinenstop stellt sich dabei das Problem, dass bei hohen Schweissgeschwindigkeiten (grösser als ca. 90 m/min) die ersten Zargen aufeinander auflaufen, d.h. der Zargenabstand zwischen der ersten und zweiten und allenfalls dritten Zarge kann nicht optimal eingestellt werden. Es entsteht ferner bei diesen Zargen ein relativ grosser Schlupf zwischen den Schweissrollen und den Zargen, was dadurch feststellbar ist, dass der Zinnabdruck, den die Zargen auf der benutzten Drahtelektrode hinterlassen, länger ist als die Zargenlänge und z.B. bei einer Zargenlänge von 125 mm und einer Schweissgeschwindigkeit von 138,8 m/min für die erste Zarge 139 mm beträgt, für die zweite Zarge 133 mm und für die nachfolgenden Zargen konstant nur 128 mm beträgt. Ein solcher Schlupf bei den anfänglichen Zargen ist unerwünscht und der Schweissqualität abträglich. Aus EP-A-0 165 910, welches Dokument den nächstliependen Stand der Technik darstellt, ist eine Schweissmaschine bekannt, bei welcher mehrere Rollen eines Führungswerkzeuges dauernd angetrieben werden, wozu ein Zahnriemen und gegenseitige Verzahnungen der Rollen eingesetzt werden.

Der Erfindung liegt deshalb die Aufgabe zugrunde, ein Verfahren zum Schweissen zu schaffen, das diese Nachteile nicht oder in vermindertem Masse aufweist.

Dies wird bei einem Verfahren der eingangs genannten Art durch die kennzeichnenden Merkmale des Anspruchs 1 erreicht.

Die Merkmale des Oberbegriffs des Anspruchs 1 sind aus EP-A-0 165 910 bekannt.

Durch den Antrieb mindestens einer Rolle kann der Abbremseffekt des noch stillstehenden Führungswerkzeuges beim Anlaufen des Schweissvorganges bzw. der Zargenzuführung kompensiert werden, so dass auch die erste und zweite Zarge mit im wesentlichen der Sollgeschwindigkeit zu den Schweissrollen gelangt; dabei ist der Antrieb nur vor und während des Durchlaufes der ersten und allenfalls noch zweiten Zarge einer Abfolge von Zargen eingeschaltet, da nachfolgend die Rollen ohnehin von den durchlaufenden Zargen auf der Solldrehzahl gehalten werden. Vorzugsweise werden mehrere Rollen angetrieben.

Eine bevorzugte Ausführungsform treibt die Rolle oder die Rollen jeweils mittels eines Druckluftstrahles an.

Der Erfindung liegt weiter die Aufgabe zugrunde, eine Vorrichtung zur Durchführung des Verfahrens zu schaffen. Diese ist durch die Merkmale des Anspruchs 4 gekennzeichnet.

Im folgenden werden Ausführungsbeispiele der Erfindung anhand der Zeichnungen näher erläutert. Dabei zeigt
Figur 1 eine perspektivische Ansicht eines Führungswerkzeuges zur Ausführung der Erfindung; und
Figur 2 eine Frontalansicht des Führungswerkzeuges von Figur 1.

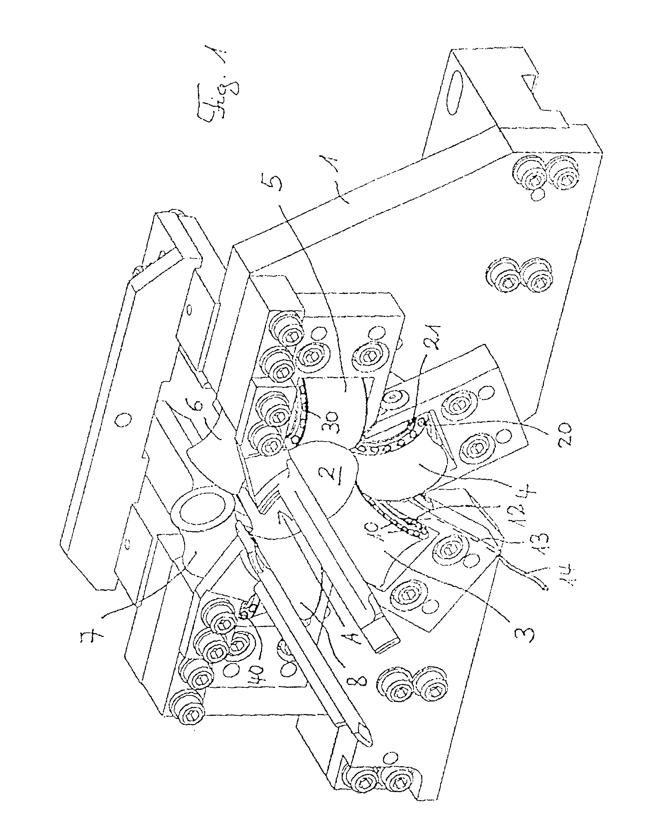

Figur 1 zeigt eine perspektivische Ansicht eines grundsätzlich bekannten Führungswerkzeuges bzw. Kalibrierwerkzeuges 1. Dieses weist eine Mehrzahl von drehbar gelagerten Rollen 3, 4, 5, 6, 7 und 8 auf, welche in ihrer Umfangsform an den zu verschweissenden Körper angepasst sind, und welche einen im wesentlichen kreisrunden Durchgang 2 bilden, durch welchen die zu verschweissenden Körper bzw. Behälterzargen in Pfeilrichtung A hindurchgefördert werden und von den Rollen geführt und kalibriert werden. In Förderrichtung nach den Rollen 3-8 sind die Schweissrollen mit den Drahtelektroden auf bekannte Weise angeordnet und verschweissen die überlappend oder stumpf aneinanderliegenden Längskanten der durch die Oeffnung 2 hindurchtretenden Behälterzargen. Am Anfang einer zu schweissenden Abfolge von Zargen bzw. nach jedem Schweissunterbruch stehen die Rollen 3-8 still. Dies bewirkt für die ersten nach dem Maschinenanlauf den Durchgang 2 passierenden Zargen eine Abbremsung derselben, was einerseits den Abstand dieser Zargen zu den nächstfolgenden Zargen unzulässig verringern kann und andererseits einen erhöhten Schlupf dieser Zargen zu den mit der Sollgeschwindigkeit angetriebenen Schweissrollen bzw. Drahtelektroden bewirkt. Nachdem die erste oder allenfalls auch noch die zweite Zarge das Führungswerkzeug 1 passiert hat, haben die Rollen durch die Reibung an der Zarge die Sollgeschwindigkeit erreicht und für die nachfolgenden Zargen ist der Abstand wieder korrekt und es tritt kein übermässiger Schlupf auf. Um auch für die ersten Zargen entsprechende Verhältnisse zu schaffen, werden die Rollen nun angetrieben. Bei dem dargestellten bevorzugten Beispiel sind vier Rollen 3, 4, 5 und 8 angetrieben, nicht hingegen die etwas kleineren Rollen 6 und 7. Es könnte aber natürlich auch nur eine der Rollen 3-8 angetrieben sein oder eine andere Anzahl der Gesamtzahl von Rollen. Auch ein Antrieb aller Rollen ist möglich.

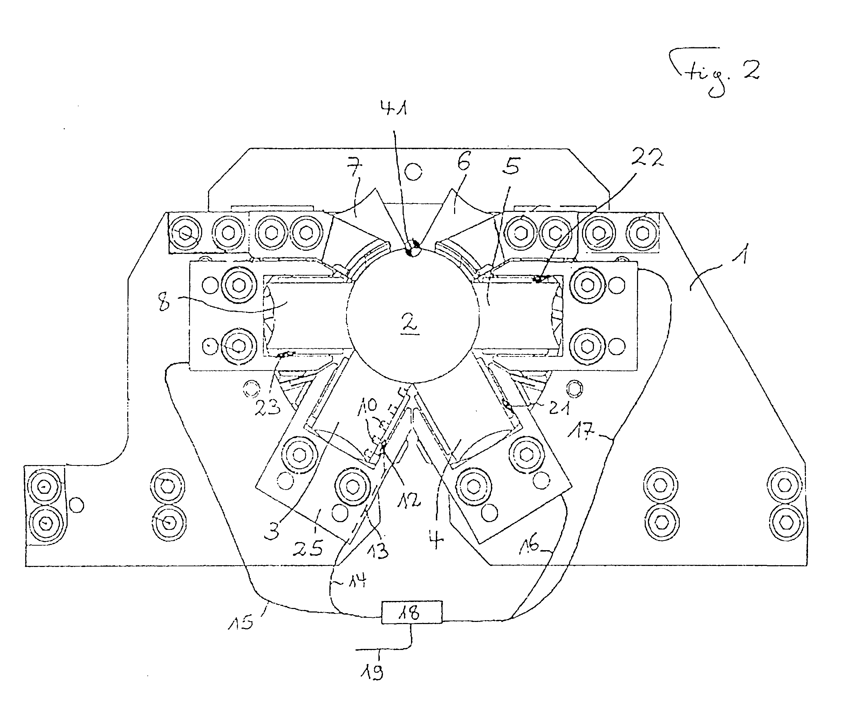

Bevorzugterweise erfolgt nun der Antrieb der Rollen durch einen nur zeitweise wirksamen Druckluftstrahl. Der Antrieb erfolgt also nur vor und während des Durchlaufes der ersten und allenfalls noch zweiten Zarge durch die Oeffnung 2 oder z.B. während einer frei einstellbaren Zeit. Danach wird der Antrieb abgestellt und die Rollen werden wie bis anhin durch die durchlaufenden Zargen selber angetrieben. Nach jedem Unterbruch der Schweissmaschine, der zu einem Stillstand der Rollen führt, wird beim Neustart erneut der Antrieb der Rollen für die erwähnt Zeitdauer, also vor dem Durchtritt und während des Durchtritts der ersten und allenfalls noch zweiten Zarge aktiviert, z.B. während insgesamt 5 Sekunden oder während einer anderen frei einstellbaren Zeit. Der eigentliche Antrieb erfolgt bevorzugterweise auf pneumatische Art. Dazu sind die angetriebenen Rollen, im gezeigten Beispiel also die Rollen 3, 4, 5 und 8, mit einer Vielzahl von Ausnehmungen versehen, auf welche ein Druckluftstrahl unter einem schrägen Winkel gerichtet ist, um die Rollen dadurch in drehende Bewegung zu versetzen. Anstelle der Ausnehmungen können natürlich auch Vorsprünge an den Rollen angeordnet sein, welche beim Anblasen mit Druckluft eine Drehung der Rollen bewirken. Bei dem gezeigten Beispiel sind die Ausnehmungen seitlich stirnseitig am Umfang der jeweiligen Rolle angeordnet, wie dies bei der Rolle 3 durch die Ausnehmungen 10 bzw. bei der Rolle 4 durch die Ausnehmungen 20 und bei der Rolle 5 durch die Ausnehmungen 30 und bei der Rolle 8 durch die Ausnehmungen 40 gezeigt ist. Die Ausnehmungen sind in diesem Fall Sacklöcher, die seitlich in die Rollen gebohrt worden sind. Natürlich ist auch eine andere Formgebung der Ausnehmungen möglich, z.B. solche die einen optimalen Lufteintritt und Luftaustritt gewährleisten, und auch eine andere Anordnung der Ausnehmungen am Umfang der Rollen. In dem gezeigten Beispiel sind die Düsen 12, 21, 22 und 23 (Fig. 2) zur Beaufschlagung der Sacklöcher mit Druckluft an der jeweiligen Halterung für die Rolle angeordnet und werden durch einen in dieser Halterung angeordneten Kanal mit Druckluft gespiesen. Der Kanal ist in Figur 1 nur bei der Rollenhalterung für die Rolle 3 angedeutet und mit 13 bezeichnet. Auch die anderen Rollenhalterungen weisen einen solchen Kanal auf, der in der Figur indes nicht dargestellt ist. An dem Kanal ist eine Druckluftleitung 14 angeschlossen, welche dem Kanal 13 bzw. der Düse 14 die Druckluft zugeführt wird, natürlich sind auch an den anderen Kanälen entsprechende Leitungen angeschlossen.

Figur 2 zeigt eine Frontalansicht desselben Kalibrier- und Führungswerkzeuges 1, wie es in Figur 1 dargestellt ist, wobei gleiche Bezugszeichen gleiche Teile bezeichnen. Auch hier ist der Durchgang 2 für die Zarge ersichtlich und es ist durch das Symbol 41 dargestellt, wo hinter dem Werkzeug 1 die Schweissebene liegt. In der Figur 2 sind die Ausnehmungen in den Rollen nur bei der Rolle 3 angedeutet und es sind die Düsen 22 und 23 ersichtlich, welche in der Figur 1 nicht dargestellt sind. Auch in der Figur 2 ist nur der Kanal 13 in der Halterung 25 der Rolle 3 dargestellt, die übrigen Kanäle in den Halterungen der Rollen 4, 5 und 8 sind nicht dargestellt. In Figur 2 schematisch dargestellt sind die Druckluftleitungen 14, 15, 16 und 17, die zu den jeweiligen Kanälen bzw. zu den Düsen 12, 21, 22 und 23 führen. Diese Druckluftleitungen werden von einem Druckreduzierventil 18 gespiesen, welches seinerseits über eine Leitung 19 an eine nicht dargestellte maschinenübliche Druckluftquelle angeschlossen ist.

Bei dem in Figur 1 und 2 gezeigten Ausführungsbeispiel sind die Ausnehmungen, wie erwähnt, als Sacklöcher ausgeführt, die z.B. einen Durchmesser von 2,5 mm aufweisen. Diese Sacklöcher werden von Düsen angeblasen, welche z.B. einen Düsendurchmesser von 1 mm aufweisen. Der Abstand der jeweiligen Düsenmündung zu der Rolle beträgt z.B. ca. 0,2 mm und der Winkel der Düse zu der Rolle kann z.B. 30° betragen oder einen anderen Winkel, bei dem sich eine optimale Anströmung der Rolle ergibt. Die Druckluft wird z.B. mit einem Druckwert von ca. 2 bar ausgeblasen, wobei vorzugsweise der Druckwert regulierbar ist, um die Beschleunigung und die Geschwindigkeit der Rollen anpassen zu können. Vorzugsweise werden mindestens für die angetriebenen Rollen diese aus einem leichten Material gefertigt, um ein geringes Trägheitsmoment aufzuweisen. Die angetriebenen Rollen können sowohl aus Keramikmaterial als auch aus Stahl oder einem anderen Material bestehen.

Durch den erfindungsgemässen Antrieb der Rollen ergibt sich ein im wesentlichen konstanter Abstand der Zargen auch für die erste und die zweite Zarge einer Serie zu schweissender Zargen. Dies erlaubt es weiter, den Zargenabstand einer Abfolge von Zargen geringer zu halten als bei herkömmlichen, nicht angetrieben Führungswerkzeugen 1. So ist z.B bei nicht angetriebenem Führungswerkzeug bei einer Zargenlänge von 125 mm und einer Schweissgeschwindigkeit von 138,8 m/min ein Zargenabstand von ca.2 mm einzustellen, damit es nicht bei den ersten Zargen zu einer Zargenkollision kommt. Durch das erfindungsgemässe angetriebene Führungswerkzeug kann bei den gleichen Parametern der Zargenabstand auf 0,8mm reduziert werden und wird auch für die erste und zweite Zarge eingehalten. Der Antrieb kann auch innerhalb eines Zargenstromes zeitweise eingeschaltet werden, wenn durch einen Fehler in dem Zargenstrom eine Lücke auftritt, um eine Verlangsamung der Rollen zu vermeiden, bzw. um die erste Zarge und allenfalls zweite Zarge nach der Lücke ungehindert durch die Rollen zur Schweisszone zu fördern.

Mittels der Erfindung können gute Schweissnahtqualitäten auch bei Erhöhung der Schweissgeschwindigkeit auf weit über 90 Meter pro Minute erzielt werden.

## Patentansprüche

1. Verfahren zum Schweissen von hohlzylindrischen Körpern, insbesondere Behälterzargen, bei welchem die Körper vor Erreichen der Schweissstelle ein mehrere Rollen (3-8) aufweisendes Führungswerkzeug (1) durchlaufen, wobei mindestens eine der Rollen (3,4,5,8) angetrieben wird, **dadurch gekennzeichnet, dass** die Rolle nur vor und während dem Durchlaufen des ersten Körpers oder des ersten und zweiten Körpers einer Folge zu schweissender Körper angetrieben wird und der Antrieb während dem Durchlaufen der nachfolgenden Körper abgeschaltet ist.

2. Verfahren nach Anspruch 1, **dadurch gekennzeichnet, dass** der Antrieb durch auf die Rolle einwirkende Druckluft erfolgt.

3. Verfahren nach Anspruch 2, **dadurch gekennzeichnet, dass** die Druckluftmenge zum Antrieb der Rolle einstellbar ist.

4. Vorrichtung zum Schweissen von hohlzylindrischen Körpern, insbesondere Behälterzargen, bei welcher die Körper vor der Schweissstelle ein mehrere Rollen (3-8) aufweisendes Führungswerkzeug (1) durchlaufen, und bei der ein Antrieb für mindestens eine der Rollen (3,4,5,8) vorgesehen ist, **dadurch gekennzeichnet, dass** der Antrieb derart ausgestaltet ist, dass die Rolle nur vor und während dem Durchlaufen des ersten Körpers oder des ersten und zweiten Körpers einer angfolgetrieben ist und der Antrieb während dem Durchlaufen der nachfolgenden Körper abgeschaltet ist.

5. Vorrichtung nach Anspruch 4, **dadurch gekennzeichnet, dass** der Antrieb von mindestens einem Druckluftstrahl gebildet wird, der auf Ausnehmungen (10,20,30,40) in der Rolle gerichtet ist, welche vorzugsweise am stirnseitigen Umfang der Rolle vorgesehen sind.

6. Vorrichtung nach Anspruch 5, **dadurch gekennzeichnet, dass** der Druckluftstrahl von einer am Rollenhalter angeordneten Düse erzeugt wird.

7. Vorrichtung nach Anspruch 6, **dadurch gekennzeichnet, dass** die Düse in einem strömungsoptimierten Winkel, vorzugsweise in einem Winkel von ca. 30°, zur die Ausnehmungen aufweisenden Stirnseite der Rolle angeordnet ist.

8. Vorrichtung nach einem der Ansprüche 5 bis 7, **dadurch gekennzeichnet, dass** der Druckluftstrahl einstellbar ist.

## Claims

1. Method of welding hollow cylindrical bodies, in particular container bodies, in which the bodies pass through a guide tool (1) comprising a plurality of rollers (3-8) before reaching the welding point at least one of the rollers (3, 4, 5, 8) being driven, **characterised in that** the roller is driven only before and during transit of the first body, or of the first and second of a series of bodies to be welded, and the drive is switched off during transit of the ensuing bodies.

2. Method according to Claim 1, **characterised in that** the roller is driven by the impingement of compressed air on the roller.

3. Method according to Claim 2, **characterised in that** the compressed air flow for driving the roller is adjustable.

4. Apparatus for welding hollow cylindrical bodies, in particular container bodies, in which the bodies pass through a guide tool (1) comprising a plurality of rollers (3-8) before the welding point, and in which a drive is provided for at least one of the rollers (3, 4, 5, 8), **characterised in that** the drive is designed so that the roller is driven only before and during transit of the first body, or of the first and second of a series of bodies, and the drive is switched off during transit of the ensuing bodies.

5. Apparatus according to Claim 4, **characterised in that** the drive is provided by at least one compressed air jet which is directed onto recesses (10, 20, 30, 40) in the roller, the said recesses preferably being provided in the end-face rim of the roller.

6. Apparatus according to Claim 5, **characterised in that** the compressed air jet is produced by a nozzle arranged on the roller bracket.

7. Apparatus according to Claim 6, **characterised in that** the nozzle is set at an angle yielding optimum flow, preferably at an angle of approx. 30°, to an end face of the roller bearing the recesses.

8. Apparatus according to any one of Claims 5 to 7, **characterised in that** the compressed air jet is adjustable.

## Revendications

1. Procédé de soudage de corps cylindriques creux, notamment de corps de récipients, dans lequel les corps traversent un outil de guidage (1) présentant plusieurs rouleaux (3 à 8) avant d'atteindre l'endroit de soudage, au moins l'un des rouleaux (3, 4, 5, 8) étant entraîné, **caractérisé en ce que** le rouleau n'est entraîné qu'avant et pendant le passage du premier corps ou du premier et du deuxième corps d'une succession de corps à souder, et que pendant le passage des corps suivants l'entraînement est arrêté.

2. Procédé selon la revendication 1, **caractérisé en ce que** l'entraînement est effectué par air comprimé agissant sur le rouleau.

3. Procédé selon la revendication 2, **caractérisé en ce que** le débit d'air comprimé pour l'entraînement du rouleau est réglable.

4. Dispositif de soudage de corps cylindriques creux, notamment de corps de récipients, dans lequel les corps traversent un outil de guidage (1) présentant plusieurs rouleaux (3 à 8) avant d'atteindre l'endroit de soudage, et dans lequel un entraînement d'au moins l'un des rouleaux (3, 4, 5, 8) est prévu, **caractérisé en ce que** l'entraînement est configuré de manière à ce que le rouleau n'est entraîné qu'avant et pendant le passage du premier corps ou du premier et du deuxième corps d'une succession et que pendant le passage des corps suivants l'entraînement est arrêté.

5. Dispositif selon la revendication 4, **caractérisé en ce que** l'entraînement est constitué par au moins un jet d'air comprimé dirigé vers des orifices (10, 20, 30, 40) prévus dans le rouleau de préférence sur la circonférence côté face frontale du rouleau.

6. Dispositif selon la revendication 5, **caractérisé en ce que** le jet d'air comprimé est généré par une buse disposée sur le support de rouleau.

7. Dispositif selon la revendication 6, **caractérisé en ce que** la buse est disposée dans un angle optimisant le flux, de préférence dans un angle de 30° environ, par rapport à la face frontale du rouleau présentant les orifices.

8. Dispositif selon l'une des revendications 5 à 7, **caractérisé en ce que** le jet d'air comprimé est réglable.
